# EUROPÄISCHE PATENTANMELDUNG

(11) **EP 1 593 937 A1**
(43) Veröffentlichungstag der Anmeldung: **09.11.2005**
(21) Anmeldenummer: 05102560.9
(22) Anmeldetag: 31.03.2005
(51) Int. Cl.: G01C 21/34

(54) **Verfahren zum Ausarbeiten einer Route in einem Navigationssystem**

(30) Priorität: 06.05.2004 DE 102004022265
(71) Anmelder: ROBERT BOSCH GMBH, 70442 Stuttgart (DE)
(72) Erfinder: Frese, Thomas, 58706, Menden (DE); Aumayer, Richard, 31199, Diekholzen (DE)

(57) **Zusammenfassung**

Um ein Verfahren zum Ausarbeiten einer Route von einem Ausgangspunkt zu einem Zielpunkt in einem Navigationssystem insbesondere in einem Kraftfahrzeug zu schaffen wobei das Navigationssystem einem Nutzer des Navigationssystems eine Route vorschlägt, wird vorgeschlagen, dass bei der Ausarbeitung der Route ein Faktor, der den Energieverbrauch zum Zurücklegen der Route beeinflusst, berücksichtigt wird. Des Weiteren wird ein entsprechendes Navigationssystem angegeben.

## Beschreibung

Die Erfmdung betrifft ein Verfahren zum Ausarbeiten einer Route von einem Ausgangspunkt zu einem Zielpunkt in einem Navigationssystem insbesondere in einem Kraftfahrzeug, wobei das Navigationssystem insbesondere einem Nutzer des Navigationssystems eine Route vorschlägt, sowie ein entsprechend ausgelegtes Navigationssystem.

Die Routenberechnung in einem Navigationssystem von einem Ausgangspunkt zu einem vom Nutzer des Navigationssystems eingegebenen Zielpunkt erfolgt bei bekannten Navigationssystemen, die insbesondere in Kraftfahrzeugen eine immer größere Verbreitung finden, entweder derart, dass die kürzeste Fahrtroute für das Kraftfahrzeug, das mit dem Navigationssystem geleitet werden soll, vom Ausgangspunkt zum Zielpunkt berechnet wird oder es wird die schnellste Fahrtroute ermittelt. Hierbei werden die beispielsweise auf einer CD-ROM oder einer DVD gespeicherten Daten über das gesamte Strecken- und Wegenetz des jeweiligen Fahrtgebiets berücksichtigt. Das Navigationssystem leitet den Nutzer beziehungsweise den Fahrer des Kraftfahrzeugs dann mit optischen und/oder akustischen Signalen beispielsweise mit Pfeilen auf einem Display oder einer Textansage zu dem eingegebenen Zielpunkt.

Es sind auch Navigationssysteme für Kraftfahrzeuge bekannt, bei denen der Nutzer fahrzeugspezifische Daten wie Motorleistung oder eine schnelle oder langsame Fahrweise eingeben kann wobei diese Faktoren bei der Berechnung der optimalen Fahrtroute berücksichtigt werden. Auch können bestimmte Arten von Straßen wie z. B. Autobahnen von der Fahrtroute ausgeschlossen werden, wenn der Nutzer dies wünscht.

Ebenso ist es möglich, dass Wegepunkte wie beispielsweise Sehenswürdigkeiten, die der Nutzer sehen möchte, eingegeben werden, die dann vom Navigationssystem angesteuert werden.

Weiterhin ist es für Navigationssysteme in Kraftfahrzeugen bekannt, dass bei der Ermittlung der jeweiligen Fahrtroute auch aktuelle Einflüsse wie über Verkehrsfunk gemeldete Verkehrsstaus oder Straßensperrungen bei der weiteren Ermittlung der Fahrtroute berücksichtigt werden können, um diese Verkehrshindernisse zu umfahren.

Als nachteilig hierbei ist anzusehen, dass praktisch nur äußere Einflüsse wie die Art der Straße, die Entfernung zum Zielort und eventuell die Verkehrsverhältnisse bei der Bestimmung der optimalen Route berücksichtigt werden können.

Ausgehend von diesem Stand der Technik liegt der Erfindung die Aufgabe zugrunde, ein Verfahren zum Ausarbeiten einer Route in einem Navigationssystem zu schaffen, bei dem auch ökologische Aspekte berücksichtigt werden. Weiterhin soll ein entsprechendes Navigationssystem geschaffen werden.

Diese Aufgabe wird jeweils durch die in den Ansprüchen 1 und 10 angegebenen Merkmale gelöst.

Der Kerngedanke der Erfindung besteht darin, dass bei einer Ausarbeitung einer Route durch das Navigationssystem zusätzlich zumindest ein Faktor berücksichtigt wird, der einen Einfluss auf den Energieverbrauch beim Zurücklegen der Route vom Ausgangspunkt zum gewünschten Zielpunkt hat.

Obwohl im Folgenden die Erfindung im Wesentlichen für ein Navigationssystem in einem Kraftfahrzeug beschrieben wird ist es für den Fachmann ersichtlich, dass die Erfindung nicht auf eine Anwendung zur Berechnung einer ökologisch vorteilhaften Fahrtroute eines Kraftfahrzeugs beschränkt ist sondern auch auf allen anderen Gebieten der Technik eingesetzt werden kann in denen eine möglichst energiesparend zurückzulegende Route von einem Ausgangspunkt zu einem Zielpunkt notwendig ist.

Derartige Faktoren können u. a. die auf den unterschiedlichen möglichen Routen zum Ziel auftretenden ansteigenden Strecken sein, auf denen der Durchschnittsverbrauch des Kraftfahrzeugs gegenüber einer Fahrt in der Ebene deutlich erhöht ist, oder die Art der Straße, da auf einer Autobahn bei gemäßigtem Tempo und gleichmäßiger Fahrweise ein geringerer Kraftstoffverbrauch auftritt als auf einer Landstraße. So wird von dem Navigationssystem bei zwei in ihrer jeweiligen Länge ungefähr miteinander vergleichbaren Fahrtrouten von einem Ausgangspunkt zu einem Zielpunkt diejenige ausgewählt bei der weniger ansteigende Abschnitte auftreten oder die eine gleichmäßigere Fahrweise ermöglicht, um derart den Kraftstoffverbrauch des Kraftfahrzeugs zu minimieren. Dabei kann von dem Navigationssystem auch eine Modellrechnung angestellt und gegebenenfalls berücksichtigt werden, wie hoch die Einsparung bei einer Fahrt in der Ebene gegenüber einer Fahrt auf ansteigenden Streckenabschnitten ist, um derart eine Obergrenze für die längere Strecke in der Ebene zu ermitteln, ab der wiederum die Fahrt über die ansteigende Strecke günstiger ist. Es können auch weitere Faktoren, die einen Einfluss auf den Energieverbrauch des Kraftfahrzeugs haben wie die Zuladung des Kraftfahrzeugs, das Vorhandensein einer Anhängelast, z. B. ein Wohnanhänger, ein Dachgepäckträger, der den Luftwiederstand erhöht und dergleichen berücksichtigt werden, um beispielsweise keine Gefällestrecke mit einer schweren Anhängelast befahren zu müssen.

Es versteht sich, dass auch während einer Fahrt beziehungsweise einer anderen Art des Zurücklegens der vorgeschlagenen Route beispielsweise bei sich ändernden äußeren Umständen von dem Navigationssystem eine neue Route vom momentanen Ausgangspunkt aus erstellt werden kann, die unter den geänderten Verhältnissen die energiesparendste ist.

Der Vorteil der Erfindung besteht darin, dass durch die Berücksichtigung eines den Energieverbrauch insbesondere des Kraftfahrzeugs beeinflussenden Faktors der Kraftstoffverbrauch des Kraftfahrzeugs oder ein sonstiger Energieverbrauch durch das Befolgen der von dem Navigationssystem vorgeschlagenen ökologisch vorteilhaften Route gesenkt werden kann.

Vorteilhafte Ausgestaltungen der Erfindung sind in den Unteransprüchen gekennzeichnet.

Nach der im Anspruch 2 angegebenen Ausgestaltung kann die Berücksichtigung insbesondere eines den Energieverbrauch des Kraftfahrzeugs beeinflussenden Faktors an-und abgeschaltet werden. Dies kann beispielsweise mit einer zusätzlichen Taste am Navigationssystem, das vorzugsweise in ein Armaturenbrett des Kraftfahrzeugs eingebaut ist, vorgenommen werden. Bevorzugt ist diese Taste in grüner Farbe gehalten, um beim Betätigen dieser Taste das subjektive Gefühl des umweltfreundlichen Handelns hervorzurufen. Es ist möglich, dass zuerst eine übliche Fahrtroute von dem Navigationssystem ermittelt wird und anschließend, nach Betätigung der grünen Taste, eine Alternativroute mit einem minimierten Energieverbrauch. Dadurch erhält der Nutzer des Kraftfahrzeugs die Möglichkeit die schnellste oder falls er es wünscht die energiesparendste Route auszuwählen.

Gemäß der Ausgestaltung nach Anspruch 3 wird bei der Ermittlung der Fahrtroute ein kraftfahrzeuginterner Faktor berücksichtigt. Dies können u. a. die Zuladung, eine Anhängelast wie ein Wohnanhänger, ein Dachgepäckträger sowie die fahrzeugspezifischen Daten wie Leistung und die geschwindigkeitsabhängigen Kraftstoffverbräuche sein. Vorzugsweise werden die veränderlichen Faktoren, die einen Einfluss auf den Kraftstoffverbrauch haben, mit hierfür geeigneten Sensoren erfasst und über dem Fachmann bekannte Datenbus-Architekturen an das Navigationssystem weitergeleitet. Beispielsweise kann mit einem Sensor an der Anhängerkupplung das Vorhandensein einer Anhängelast festgestellt werden. Aus den durch die Anhängelast veränderten Beschleunigungswerten des Kraftfahrzeugs kann eine zentrale Steuereinrichtung des Kraftfahrzeugs das Gewicht der Anhänglast ermitteln und dem Navigationssystem zur Berücksichtigung bei der Ermittlung der energiesparendsten Fahrtroute zuleiten. Hierbei ist unter dem Begriff kraftfahrzeuginterner Faktor auch ein solcher Faktor zu verstehen, der bei einer anderweitigen Nutzung des Navigationssystems einen internen Einfluss auf den Energieverbrauch beim Zurücklegen der Route hat.

In einer in Anspruch 4 vorgeschlagenen Ausgestaltung werden externe Faktoren berücksichtigt. Dies können u. a. die Straßenzustände und die Arten der Straßen also Landstraße oder mehrspurige Autobahn sein. Ebenso sind diese externen Faktoren die jeweiligen Gefälleabschnitte der unterschiedlichen Fahrtrouten, die Straßenzustände wie neuer oder beschädigter Fahrbahnbelag sowie die jeweiligen Verkehrsverhältnisse. Beispielsweise können Staumeldungen in bekannter Weise bei der Ermittlung einer energiesparenden Fahrtroute berücksichtigt werden. Ebenso können seit langem bekannte Unfall- oder Stauschwerpunkte wie u. a. gefährliche Kreuzungen, Bahnübergänge oder Strecken mit hohem Verkehrsaufkommen bei der Auswahl einer Fahrtroute berücksichtigt werden, um diese Streckenabschnitte weiträumig zu umfahren, damit bei gleichmäßiger Fahrtgeschwindigkeit und eventuell geringfügig verlängerter Wegstrecke dennoch weniger Kraftstoff verbraucht wird. Insbesondere sind diese externen Faktoren in einem Datenspeicher für das Navigationssystem abgelegt. Dieser Datenspeicher, üblicherweise eine CD-Rom oder eine DVD, ist mit Zusatzinformationen für die jeweilige Strecke wie das Gefälle eines Streckenabschnitts oder bekannte Stau- und Unfallgefahren versehen. Bei der Ermittlung der energiesparendsten Fahrtroute werden diese zusätzlichen Informationen vom Navigationssystem mit berücksichtigt.

Zur Anpassung an unterschiedliche Verkehrsverhältnisse sowie an sich ändernde Gegebenheiten am oder im Kraftfahrzeug können Änderungen eines oder mehrerer Faktoren, die den Kraftstoff- beziehungsweise Energieverbrauch beeinflussen, von dem Navigationssystem berücksichtigt werden wie im Anspruch 5 gekennzeichnet. Derartige Änderungen können ebenfalls mit Sensoren im Kraftfahrzeug erfasst werden wie beispielsweise die Abnahme des Gesamtgewichts des Kraftfahrzeugs durch die Abnahme der Kraftstoffmenge im Tank und/oder durch die Verarbeitung von Verkehrsmeldungen oder sonstigen von außen einfließenden Informationen. Insbesondere ist vorgeschlagen, dass sich ändernde Wetterverhältnisse wie einsetzender Schneefall oder Regen, der ebenfalls sensorisch feststellbar ist, bei der Auswahl einer Fahrtroute berücksichtigt werden können. Beispielsweise werden bei Schneefall Fahrtrouten über Autobahnen vom Navigationssystem vorgeschlagen, da diese üblicherweise zuerst geräumt werden und daher eine sichere und energiesparende Fahrweise ermöglichen. Ebenso kann eine verbleibende Kraftstoffmenge beziehungsweise die in einem Energiespeicher noch vorhandene Energie für einen Elektromotor in die Ermittlung der Fahrtroute einfließen.

Zur Erhöhung der Sicherheit für die Insassen des Kraftfahrzeugs sowie der Umgebung wird entsprechend dem Anspruch 6 ein Sicherheitsaspekt bei der Ermittlung der Fahrtroute berücksichtigt. Ein Sicherheitsaspekt kann unter anderem die Vermeidung des Befahrens einer unfall- oder staureichen Strecke sein oder eines Waldstücks in dem üblicherweise Wild die Straße überquert. Ebenso können Straßen mit Schulen oder Kindergärten von der Routenwahl ausgeschlossen werden, um in Abhängigkeit von der Tageszeit eine Gefährdung der häufig die Straße unachtsam überquerenden Kinder zu vermeiden. Auf diese Weise wird die Berücksichtigung der Sicherheitsaspekte und die optimale Verknüpfung zwischen diesen und dem ökologischen Aspekten sichergestellt.

Gemäß der Ausgestaltung in Anspruch 7 wird eine Minimierung einer Beeinträchtigung der Umwelt durch die Wahl der Fahrtroute erreicht. Dies kann beispielsweise dadurch erfolgen, dass im Frühjahr und/oder im Herbst bekannte Wegstrecken, auf denen eine Krötenwanderung stattfmdet, vermieden werden. Ebenso beispielsweise können Krankenhäuser, Altenheime oder dergleichen umfahren werden, um eine Belästigung durch Lärmemissionen und/oder Abgasemissionen und/oder Partikelemissionen des Kraftfahrzeugs zu minimieren.

Gemäß der vorteilhaften Weiterbildung in Anspruch 8 wird bei einem Kraftfahrzeug mit Elektroantrieb eine Rekuperation des Energiespeichers berücksichtigt. Es ist dem Fachmann bekannt, dass Fahrzeuge mit Elektro- oder Hybridantrieb bei Bergabfahrten den Elektromotor als Generator zuschalten, um einen Teil der bei einer Bergabfahrt entstehenden Energie zurückzugewinnen und in dem Energiespeicher abzuspeichern. Dies kann bei der Auswahl einer Fahrtroute berücksichtigt werden. So kann die Fahrtroute derart gewählt werden, dass bei einer Bergfahrt die Passhöhe mit der zur Verfügung stehenden Energie erreicht wird, um bei der anschließenden Bergabfahrt den Energiespeicher wieder aufzuladen. Selbstverständlich können hierbei ausreichende Sicherheitsgrenzen in Abhängigkeit des Ladezustands des Energiespeichers berücksichtigt werden. Ebenso können Ladestationen für Elektrofahrzeuge beziehungsweise Tankstellen mit speziellen Kraftstoffen wie Wasserstoff, Biodiesel oder Erdgas bei der Auswahl einer Fahrtroute berücksichtigt werden.

In Anspruch 9 ist angegeben, dass der Füllstand einer Filtereinrichtung bei der Ermittlung der Fahrtroute berücksichtigt wird. Beispielsweise ist es bei Rußpartikelfiltern für Dieselmotoren in gewissen Zeitabständen notwendig, diesen Filter durch eine Volllastfahrt "frei zu brennen", um die im Filter zurückgehaltenen Partikel abzubauen, damit der Filter seinen Wirkungsgrad behält. Hierfür ist eine Autobahnfahrt mit erhöhter Geschwindigkeit geeignet. Besonders bei langen Fahrtstrecken kann vom Navigationssystem eine Autobahnfahrt eingeplant werden, um einen vollen Partikelfilter wieder zu reinigen. In gleicher Weise kann die Leerung eines Speicherkatalysators berücksichtigt werden. Bei der erfindungsgemäßen Nutzung des Füllstandes eines Energiespeichers oder mehrerer Energiespeicher handelt es sich um die optimale Nutzung der Inhalte von Energiespeichern wie bei Hybridfahrzeugen die Menge des Kraftstoffes im Kraftstofftank und die noch vorhandene Batteriekapazität. Die optimale Nutzung der Energieinhalte von Energiespeichern ist zu unterscheiden von der Berücksichtigung der Ereignisse während des Zurücklegens der Fahrtroute auf den Energieverbrauch. Eine optimale Nutzung z. B. beim Beschleunigen der Energieinhalte kann auch durch den unterschiedlichen Charakter der Energiewandler erfolgen, da beispielsweise ein Verbrennungsmotor bei kleiner Drehzahl nur ein kleines Drehmoment aufweist aber ein Elektromotor bei kleiner Drehzahl ein großes Drehmoment.

Zur Verwirklichung des erfindungsgemäßen Verfahrens ist ein an sich bekanntes Navigationssystem mit einer zusätzlichen Bewertungseinrichtung versehen, die unterschiedliche Routen daraufhin bewertet, ob sie eine Verringerung des Energieverbrauchs beim Zurücklegen der Route von einem Ausgangspunkt zu einem Zielpunkt ermöglichen. Dazu verarbeitet das Navigationssystem insbesondere fahrzeuginterne und/oder externe Daten wie beispielsweise Verkehrsmeldungen und Daten von Sensoren im Kraftfahrzeug, die Faktoren messen, die einen Einfluss auf den Kraftstoffverbrauch des Kraftfahrzeugs haben. Die zusätzliche Bewertungseinrichtung ist in einem bekannten Navigationssystem hard- und/oder softwaremäßig implementiert und kann vorzugsweise vom Nutzer mit einem weiteren Bedienelement am Navigationssystem zu- und abgeschaltet werden. Das Navigationssystem ist nicht notwendigerweise in ein Kraftfahrzeug eingebaut sondern kann auch auf allen anderen Gebieten der Technik eingesetzt werden. Weiterhin ist das Navigationssystem derart ausgelegt, dass die vorstehend beschriebenen Verfahren ausführbar sind.

## Patentansprüche

1. Verfahren zum Ausarbeiten einer Route von einem Ausgangspunkt zu einem Zielpunkt in einem Navigationssystem insbesondere in einem Kraftfahrzeug, wobei das Navigationssystem insbesondere einem Nutzer des Navigationssystems eine Route vorschlägt, **dadurch gekennzeichnet, dass** bei der Ausarbeitung der Route ein Faktor, der den Energieverbrauch zum Zurücklegen der Route beeinflusst, berücksichtigt wird.

2. Verfahren nach Anspruch 1, **dadurch gekennzeichnet, dass** die Berücksichtigung des Faktors an- und abgeschaltet werden kann.

3. Verfahren nach Anspruch 1 oder 2, **dadurch gekennzeichnet, dass** ein kraftfahrzeuginterner Faktor berücksichtigt wird, der insbesondere mit einem Sensor erfasst wird.

4. Verfahren nach einem der Ansprüche 1 bis 3, **dadurch gekennzeichnet, dass** ein externer Faktor berücksichtigt wird, der insbesondere in einem Datenspeicher für das Navigationssystem abgelegt ist.

5. Verfahren nach einem der Ansprüche 1 bis 4, **dadurch gekennzeichnet, dass** eine Änderung des Faktors berücksichtigt wird.

6. Verfahren nach einem der Ansprüche 1 bis 5, **dadurch gekennzeichnet, dass** ein Sicherheitsaspekt berücksichtigt wird, insbesondere zur Erhöhung der aktiven und/oder passiven Sicherheit.

7. Verfahren nach einem der Ansprüche 1 bis 6, **dadurch gekennzeichnet, dass** eine Minimierung einer Beeinträchtigung der Unwelt erreicht wird, insbesondere hinsichtlich von Lärmemissionen und/oder Abgasemissionen und/oder Partikelemissionen eines Kraftfahrzeugs.

8. Verfahren nach einem der Ansprüche 1 bis 7, **dadurch gekennzeichnet, dass** bei einem Kraftfahrzeug mit Elektroantrieb eine Rekuperation berücksichtigt wird.

9. Verfahren nach einem der Ansprüche 1 bis 8, **dadurch gekennzeichnet, dass** ein Füllstand einer Filtereinrichtung und/oder von einem oder mehreren Energiespeichern berücksichtigt wird.

10. Navigationssystem, insbesondere in einem Kraftfahrzeug, zur Ausarbeitung einer Route von einem Ausgangspunkt zu einem Zielpunkt, **dadurch gekennzeichnet, dass** eine Bewertungseinrichtung vorgesehen ist, um bei der Ausarbeitung der Route einen Faktor zu berücksichtigen, der einen Einfluss auf den Energieverbrauch beim Zurücklegen der Route hat.
